(19) Europäisches Patentamt
European Patent Office
Office européen des brevets

(11) **EP 2 725 324 A1**

(12) **EUROPÄISCHE PATENTANMELDUNG**

(43) Veröffentlichungstag:
**30.04.2014 Patentblatt 2014/18**

(51) Int Cl.:
***G01D 5/165*** (2006.01)

(21) Anmeldenummer: **12007289.7**

(22) Anmeldetag: **23.10.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Hochschule für angewandte Mannheim 68163 Mannheim (DE)**

(72) Erfinder:
• **Voigt, Burkhard**
**68163 Mannheim (DE)**
• **Fastner, Mirko**
**69259 Wilhelmsfeld (DE)**

(74) Vertreter: **Müller-Boré & Partner Patentanwälte PartG mbB**
**Friedenheimer Brücke 21**
**80639 München (DE)**

(54) **Phasenanaloger Wegsensor mit elektrischem Feld**

(57) Die vorliegende Erfindung betrifft eine Vorrichtung und ein Verfahren zur Positionsbestimmung und insbesondere zur kontaktlosen Positions-, Winkel- und/oder Bewegungsmessung. Dabei umfasst eine erfindungsgemäße Vorrichtung insbesondere zumindest ein Sendemodul (10). Das Sendemodul umfasst zumindest einen ersten elektrischen Längsleiter (14) und einen Referenzleiter (16), die sich von einem ersten Endabschnitt (18) des Sendemoduls zu einem zweiten Endabschnitt (20) des Sendemoduls (10) erstrecken; einen ersten Signalgeber (22), welcher ausgelegt ist, am ersten Endabschnitt (18) des Sendemoduls (10) zwischen dem ersten elektrischen Längsleiter (14) und dem Referenzleiter (16) ein erstes periodisches Spannungssignal mit einer ersten Phase bereitzustellen; und einen zweiten Signalgeber (24), welcher ausgelegt ist, am zweiten Endabschnitt (20) des Sendemoduls (10) zwischen dem ersten elektrischen Längsleiter (14) und dem Referenzleiter (16) ein zweites periodisches Spannungssignal mit einer gegenüber der ersten Phase um eine bestimmte Phasenverschiebung ( $\alpha_2$ ) verschobenen zweiten Phase bereitzustellen. Außerdem umfasst die Vorrichtung eine Sensoreinrichtung, welche zumindest ein relativ zum Sendemodul (10) bewegbares Sensorelement (12) umfasst, welches ausgelegt ist, ein zwischen dem ersten elektrischen Längsleiter (14) und dem Referenzleiter (16) erzeugtes elektrisches Feld zu erfassen, wobei die Sensoreinrichtung ausgelegt ist, eine Phasenverschiebung des erfassten elektrischen Feldes relativ zu einem periodischen Referenzsignal zu ermitteln, dessen Phase relativ zum ersten Spannungssignal um eine Referenzphase verschoben ist. Diese Phasenverschiebung ist damit ein Maß für die Position des Sensorelements relativ zu den Endabschnitten des Sendemoduls.

**Fig. 1**

EP 2 725 324 A1

**Beschreibung**

Die vorliegende Erfindung betrifft eine Vorrichtung und ein Verfahren zur Positionsbestimmung und insbesondere zur kontaktlosen Positions-, Winkel- und/oder Bewegungsmessung.

Derzeit übliche Positions- oder Wegsensoren arbeiten beispielsweise mit Bändern, in die kleine Dauermagnete implementiert sind. Die Position dieser kleinen Magnete wird über magnetfeldabhängige Widerstände erfasst. Die aktuelle Position bzw. Lage zwischen den Magneten und den magnetfeldabhängigen Widerständen wird ausgezählt, d.h. die Anzahl der Magnete, die von den Widerständen passiert wurden, wird detektiert und damit die Position der Widerstände relativ zu den Magneten ermittelt. Zur Verbesserung der räumlichen Auflösung wird oft eine analoge Interpolation von Zwischenpositionen vorgenommen. Für eine sichere Funktion müssen die magnetfeldabhängigen Widerstände nah am Magnetband positioniert sein.

Ein weiterer möglicher Ansatz ist beispielsweise aus WO 2007/107353 A1 bekannt. Darin wird ein periodisches Signal durch ein Verzögerungsnetzwerk geschickt, welches eine Vielzahl von Verzögerungsgliedern aufweist. Jedes Verzögerungsglied verzögert das Signal um eine bekannte Phase und gibt ein entsprechendes Ausgabesignal aus, welches mittels eines relativ zum Verzögerungsnetzwerk beweglichen Sensorelements erfasst werden kann. Aus der Phase des erfassten Signals kann damit die Position des Sensorelements relativ zum Verzögerungsnetzwerk relativ genau und zuverlässig ermittelt werden. Je nach Ausführungsform weisen einzelne Verzögerungsglieder induktive und/oder kapazitive Schaltungskomponenten auf, um die erforderliche Phasenverschiebung zu erreichen. Eine andere sehr effiziente Möglichkeit für eine Positionsbestimmung mit hohem Auflösungsvermögen ist aus EP 2 428 773 A1 bekannt. Darin ist ein Stromnetzwerk an zwei Stromquellen angeschlossen, die phasenverschobene periodische Signale in das Stromnetzwerk einkoppeln. Das durch den im Stromnetzwerk fließenden Strom erzeugte Magnetfeld wird mittels eines Sensorelements phasenaufgelöst erfasst. Aus der Phase des induktiven Signals lässt sich auf die Position des Sensorelements relativ zum Stromnetzwerk schließen.

Aufgabe der vorliegenden Erfindung ist es, eine einfache Vorrichtung und ein entsprechendes Verfahren zur Positionsbestimmung mit einem hohen Auflösungsvermögen bereitzustellen. Diese Aufgabe wird durch eine Vorrichtung und ein Verfahren mit den im Anspruch 1 bzw. im Anspruch 8 angegebenen Merkmalen gelöst. Bevorzugte Ausführungsformen sind Gegenstand der abhängigen Ansprüche.

Somit stellt die vorliegende Erfindung eine Vorrichtung zur Positionsbestimmung bereit, welche zumindest ein Sendemodul und eine Empfangseinrichtung (hier auch als Sensoreinrichtung bezeichnet) umfasst. Dabei weist das Sendemodul zumindest einen ersten elektrischen Längsleiter und einen Referenzleiter auf, die sich von einem ersten Endabschnitt des Sendemoduls zu einem zweiten Endabschnitt des Sendemoduls erstrecken. Insbesondere erstreckt sich zumindest der erste elektrische Längsleiter zwischen den beiden Endabschnitten entlang bzw. parallel zu einer Längserstreckung des Sendemoduls. Die Längserstreckung des Sendemoduls bildet dabei einen Messweg, also einen Weg, entlang dessen durch die erfindungsgemäße Vorrichtung eine Position bestimmt werden kann. Die Endabschnitte des Sendemoduls legen dabei insbesondere einen Anfang bzw. ein Ende des Messweges bzw. des messbaren Weges fest. Je nach Anwendung und dem damit gewünschten Messweg bildet die Längserstreckung zumindest abschnittsweise eine gerade Strecke oder eine gekrümmte Kurve, wie z.B. einen Kreisbogen. Damit lassen sich beispielsweise Positionen entlang eines linearen Messweges und/oder Winkels messen.

Entsprechend folgt vorzugsweise zumindest der erste elektrische Längsleiter dieser geraden bzw. gekrümmten Längserstreckung. Im Falle eines gekrümmten Messweges ist der zum Messweg parallele Verlauf des ersten elektrischen Längsleiters (sowie auch ein eventuell zueinander paralleler Verlauf des ersten elektrischen Längsleiters und des Referenzleiters) so zu verstehen, dass entsprechende Tangenten an den Messweg und den ersten elektrischen Längsleiter (und gegebenenfalls den Referenzleiter) parallel zueinander verlaufen. Soweit insbesondere der erste elektrische Längsleiter und der Referenzleiter, welcher im folgenden gegebenenfalls auch als zweiter elektrischer Längsleiter bezeichnet wird, parallel zueinander verlaufen, haben diese beiden elektrischen Längsleiter in einer Richtung senkrecht zur Längserstreckung (diese kann hier auch Quererstreckung genannt werden) insbesondere einen konstanten gegenseitigen Abstand.

Der erste elektrische Längsleiter kann insbesondere als elektrische Leiterbahn mit einem bekannten oder bestimmbaren elektrischen Widerstand insbesondere mit einem gleichmäßigen Widerstandsverlauf ausgebildet sein. In einer bevorzugten Ausführungsform ist der Referenzleiter analog zum ersten elektrischen Längsleiter und besonders bevorzugt parallel dazu als zweiter elektrischer Längsleiter ausgebildet. In einer anderen bevorzugten Ausführungsform stellt der Referenzleiter ein elektrisches Erdungspotential bereit und ist beispielsweise als zumindest ein Teil eines elektrisch leitfähigen Vorrichtungsgehäuses oder Vorrichtungsrahmens ausgebildet. Aber selbst wenn der Referenzleiter nicht als Teil eines Vorrichtungsgehäuses ausgebildet ist, muss er - zumindest wenn dessen elektrischer Widerstand wesentlich kleiner ist als der elektrische Widerstand des ersten elektrischen Längsleiters - nicht notwendigerweise parallel zum ersten elektrischen Längsleiter bzw. entlang der Längserstreckung des Sendemoduls verlaufen. Entscheidend ist lediglich, dass er sich durchgängig elektrisch leitfähig vom ersten Endabschnitt zum zweiten Endabschnitt des Sendemoduls erstreckt.

Außerdem weist das zumindest eine Sendemodul einen ersten Signalgeber (insbesondere in Form einer ersten Spannungsquelle) auf, welcher ausgelegt ist, am ersten Endabschnitt des Sendemoduls zwischen dem ersten elektrischen Längsleiter und dem Referenzleiter ein erstes periodisches Spannungssignal mit einer ersten Phase bereitzustellen. Der erste elektrische Längsleiter und der Referenzleiter sind dabei am ersten Endabschnitt vorzugsweise direkt mit dem ersten Signalgeber verbunden, so dass am ersten Endabschnitt zwischen dem ersten elektrischen Längsleiter und dem Referenzleiter ein Potentialunterschied vorliegt, der dem ersten periodischen Spannungssignal entspricht. Durch den elektrischen Potentialunterschied zwischen dem ersten elektrischen Längsleiter und dem Referenzleiter entsteht ein elektrisches Feld, dessen Phasenlage der Phase des Potentialunterschieds entspricht. Im Bereich des ersten Endabschnitts entspricht die Phasenlage des elektrischen Feldes somit im wesentlichen der ersten Phase des ersten periodischen Spannungssignals.

Außerdem weist das zumindest eine Sendemodul in vorzugsweise analoger Weise einen zweiten Signalgeber (insbesondere in Form einer zweiten Spannungsquelle) auf, welcher ausgelegt ist, am zweiten Endabschnitt des Sendemoduls zwischen dem ersten elektrischen Längsleiter und dem Referenzleiter ein zweites periodisches Spannungssignal mit einer gegenüber der ersten Phase um eine bestimmte Phasenverschiebung verschobenen zweiten Phase bereitzustellen. Der erste elektrische Längsleiter und der Referenzleiter sind dabei am zweiten Endabschnitt vorzugsweise direkt mit dem zweiten Signalgeber verbunden, so dass am zweiten Endabschnitt zwischen dem ersten elektrischen Längsleiter und dem Referenzleiter ein Potentialunterschied vorliegt, der dem zweiten periodischen Spannungssignal entspricht. Durch den elektrischen Potentialunterschied zwischen dem ersten elektrischen Längsleiter und dem Referenzleiter entsteht ein elektrisches Feld, dessen Phasenlage der Phase des Potentialunterschieds entspricht. Im Bereich des zweiten Endabschnitts entspricht die Phasenlage des elektrischen Feldes somit im Wesentlichen der zweiten Phase des zweiten periodischen Spannungssignals.

Die von der erfindungsgemäßen Vorrichtung umfasste Sensoreinrichtung weist zumindest ein relativ zum Sendemodul bewegbares Sensorelement auf, welches ausgelegt ist, das zwischen dem ersten elektrischen Längsleiter und dem Referenzleiter erzeugte elektrische Feld zu erfassen. Dabei ist die Sensoreinrichtung ausgelegt, eine Phasenverschiebung des erfassten elektrischen Feldes relativ zu einem periodischen Referenzsignal zu ermitteln, dessen Phase relativ zum ersten Spannungssignal um eine Referenzphase verschoben ist. Dabei kann als Referenzsignal vorzugsweise auch direkt das erste Spannungssignal verwendet werden. In diesem Fall ist die Referenzphase vorzugsweise Null.

Die beiden Signalgeber bilden zusammen mit dem ersten elektrischen Längsleiter und dem Referenzleiter einen geschlossenen Stromkreis, in dem ein von den beiden Spannungssignalen getriebener elektrischer Strom fließt. Durch diesen Stromfluss ergibt sich aufgrund eines elektrischen Widerstands des ersten elektrischen Längsleiters bzw. des Referenzleiters eine elektrische Potentialänderung (Spannungsabfall oder -anstieg) entlang des ersten elektrischen Längsleiters bzw. des Referenzleiters. Das durch die beiden Spannungssignale zwischen dem ersten elektrischen Längsleiter und dem Referenzleiter bewirkte elektrische Feld hängt aufgrund dieses Spannungsabfalls bzw. -anstiegs somit vom Ort ab und ändert sich mit der Periodizität der beiden Spannungssignale. Aufgrund der Phasenverschiebung zwischen den beiden Spannungssignalen hängt auch die Phase des elektrischen Feldes vom Ort ab. Dabei ist die Phasenverschiebung zwischen dem ersten und dem zweiten periodischen Spannungssignal insbesondere ungleich Null und ungleich 180°.

Damit ist die erfindungsgemäße Vorrichtung ausgelegt, die Phasenlage des durch das Sensorelement erfassten zeitlich periodischen elektrischen Feldes relativ zu den Phasenlagen der zeitlich periodischen Spannungssignale zur ermitteln. Das erfasste elektrische Feld ist dabei von der Position des Sensorelements relativ zu den Leiterlängskomponenten, also insbesondere der Position des Sensorelements entlang der Längserstreckung abhängig. Insbesondere hängt somit die Phasenlage des erfassten elektrischen Feldes relativ zum ersten und/oder zweiten Spannungssignal von der Position des Sensorelements entlang der Längserstreckung ab. Über die durch die Sensoreinrichtung ermittelte Phasenlage des im Sensorelement erfassten elektrischen Feldes relativ zu einem periodischen Referenzsignal und insbesondere relativ zum ersten und/oder zweiten Spannungssignal lässt sich die Position des Sensorelements relativ zum Sendemodul, insbesondere relativ zu dessen Endabschnitten bestimmen.

Dabei ist die erfindungsgemäße Positionsbestimmung nicht auf die Detektion und Auswertung von Signalintensitäten angewiesen. Anstelle dessen basiert die Positionsbestimmung auf der Ermittlung relativer Phasenlagen von Signalen, vorzugsweise im Wesentlichen unabhängig von deren Intensität. Damit erreicht die Erfindung eine hohe Störungsunempfindlichkeit bzw. Störfestigkeit und ein hohes Auflösungsvermögen mit vergleichsweise einfachen Mitteln. Insbesondere kann das Sendemodul vergleichsweise einfach aufgebaut sein und ist beispielsweise nicht auf zusätzliche Querverbindungen zwischen dem ersten elektrische Längsleiter und dem Referenzleiter angewiesen. Vielmehr können der erste elektrische Längsleiter und der Referenzleiter getrennt voneinander ausgebildet werden. Aufgrund der unerwartet hohen Empfindlichkeit der erfindungsgemäßen Phasenauswertung kann eine sehr genaue Positionsbestimmung bereits mit sehr niedrigen elektrischen Feldstärken und somit bei überraschend geringem Energieverbrauch erreicht werden.

In einer bevorzugten Ausführungsform weist der erste elektrische Längsleiter und/oder der Referenzleiter eine Vielzahl von elektrischen Widerstandskomponenten auf. Die elektrischen Widerstandskomponenten sind dabei insbesondere als diskrete Elemente im entsprechenden Längsleiter (erster elektrischer Längsleiter bzw. Referenzleiter) mit vorzugsweise gleichen Widerstandswerten ausgebildet. Durch den im entsprechenden Längsleiter aufgrund der an den beiden Endabschnitten erzeugten Potentiale fließenden Strom fällt an jeder Widerstandskomponente eine elektrische Spannung ab. Das elektrische Potential des ersten elektrischen Längsleiters und/oder des Referenzleiters hängt damit von der Position entlang des entsprechenden Längsleiters (also entlang des Messweges) ab. Damit hängt auch das elektrische Feld in der nähe des entsprechenden Längsleiters bzw. das elektrische Feld zwischen dem ersten elektrischen Längsleiter und dem Referenzleiter von der Position zwischen den beiden Endabschnitten ab. Aufgrund des Phasenunterschieds zwischen den beiden Spannungssignalen hängt vor allem die Phase des elektrischen Feldes von der Position zwischen den Endabschnitten ab. Insbesondere ändert sich die Phasenlage entlang des Messweges bei jeder Widerstandskomponente.

Vorzugsweise weist jede Widerstandskomponente der Vielzahl von Widerstandskomponenten innerhalb des ersten elektrischen Längsleiters und/oder innerhalb des Referenzleiters und/oder innerhalb des gesamten Sendemoduls den gleichen elektrischen Widerstand auf. Alternativ oder zusätzlich sind die Widerstandskomponenten innerhalb des ersten elektrischen Längsleiters und/oder innerhalb des Referenzleiters vorzugsweise in Reihe geschaltet und mit gleichen räumlichen Abständen zwischen jeweils benachbarten (in der Reihenschaltung unmittelbar hintereinander geschalteten) Widerstandskomponenten angeordnet.

Vorzugsweise liegt die Anzahl der Widerstandskomponenten im ersten elektrischen Längsleiter und/oder die Anzahl der Widerstandskomponenten im Referenzleiter im Bereich von etwa 5 bis etwa 500, besonders bevorzugt im Bereich von etwa 10 bis etwa 200, am meisten bevorzugt im Bereich von etwa 10 bis etwa 100. Der Widerstandswert jeder einzelnen Widerstandskomponente liegt dabei vorzugsweise in einem Bereich von etwa $5\,\Omega$ bis etwa $5\,k\Omega$, be-sonders bevorzugt in einem Bereich von etwa $10\,\Omega$ bis etwa $1\,k\Omega$, am meisten bevorzugt in einem Bereich von etwa $20\,\Omega$ bis etwa $200\,\Omega$.

In einer anderen bevorzugten Ausführungsform weist der erste elektrische Längsleiter und/oder der Referenzleiter einen homogenen spezifischen elektrischen Widerstand auf, so dass in gleich langen Leitungsabschnitten die gleiche Spannung abfällt. In dieser Ausführungsform sind somit vorzugsweise keine diskreten Widerstandskomponenten innerhalb entsprechenden Leiterkomponenten zwischen dem ersten und zweiten Endabschnitt vorgesehen. Das elektrische Potential entlang der entsprechenden Leiterkomponente ändert sich somit vorzugsweise stetig (kontinuierlich), insbesondere linear zwischen dem ersten und zweiten Endabschnitt.

In einer bevorzugten Ausführungsform ist der elektrische Widerstand des ersten elektrischen Längsleiters zwischen dem ersten und zweite Endabschnitt zumindest etwa 10-mal, vorzugsweise zumindest etwa 100-mal, noch mehr bevorzugt zumindest etwa 1000-mal, am meisten bevorzugt zumindest etwa 10000-mal so groß wie der elektrische Widerstand des Referenzleiters zwischen dem ersten und zweiten Endabschnitt. So weist der Referenzleiter in einer bevorzugten Ausführungsform einen elektrischen Widerstand zwischen dem ersten und zweiten Endabschnitt auf, der nicht größer als etwa $0,1\,\Omega$ ist. Dadurch wird der elektrische Widerstand des Referenzleiters im Vergleich zum elektrischen Widerstand des ersten elektrischen Längsleiters und somit auch die entlang des Referenzleiters auftretende Potentialänderung im Vergleich zu der entlang des ersten elektrischen Längsleiters auftretenden Potentialänderung vernachlässigbar. Das elektrische Potential des Referenzleiters dient somit vorzugsweise im Wesentlichen als konstantes Referenzpotential, welches insbesondere ein Erdungspotential der Vorrichtung bilden kann.

Vorzugsweise verlaufen der erste elektrische Längsleiter und der Referenzleiter zwischen dem ersten und zweiten Endabschnitt zumindest abschnittsweise parallel zueinander, insbesondere entlang einer Längserstreckung des Sendemoduls. Damit wird ein besonders günstiger Verlauf des elektrischen Feldes zwischen den beiden Längsleitern erreicht, der wiederum einerseits eine gute und zuverlässige Erfassung des elektrischen Feldes und dessen Phasenlage und andererseits einen besonders verlässlichen und präzisen Rückschluss auf die Position bewirkt.

In einer bevorzugten Ausführungsform weist der erste elektrische Längsleiter und/oder der Referenzleiter eine Länge zwischen dem ersten und zweiten Endabschnitt auf, die zumindest etwa 5-mal so groß, vorzugsweise zumindest etwa 10-mal so groß, weiter bevorzugt zumindest etwa 20-mal su groß, am meisten bevorzugt zumindest etwa 50-mal oder sogar zumindest etwa 100-mal so groß ist wie der gegenseitige (insbesondere mittlere und/oder maximale und/oder minimale) Abstand des ersten elektrischen Längsleiters und des Referenzleiters. In einer anderen bevorzugten Ausführungsform weist der erste elektrische Längsleiter eine Länge zwischen dem ersten und zweiten Endabschnitt auf, die in der selben Größenordnung liegt wie oder sogar kleiner ist als dessen Abstand zum Referenzleiter. Bei einem sehr großen Abstand des Referenzleiters bildet sich in der Umgebung des ersten elektrischen Längsleiters vorzugsweise ein im Wesentlichen zylindersymmetrisches elektrisches Feld aus.

In einem weiteren Aspekt bietet die Erfindung ein Verfahren zur Positionsbestimmung insbesondere mithilfe einer der hier beschriebenen Vorrichtungen. Das Verfahren umfasst dabei ein Bereitstellen eines ersten periodischen Spannungssignals mit einer ersten Phase zwischen einem ersten elektrischen Längsleiter und einem Referenzleiter an einem ersten Endabschnitt des ersten elektrischen Längsleiters und des Referenzleiters. Dabei erstrecken sich der erste elektrische Längsleiter und der Referenzleiter (entlang eines Messweges) vom ersten Endabschnitt zu einem zweiten Endabschnitt. Vorzugsweise bilden der erste elektrische Längsleiter und/oder der Referenzleiter einen Teil eines (bereits oben beschriebenen) Sendemoduls in einer hier beschriebenen erfindungsgemäßen Vorrichtung. Besonders bevorzugt wird das erste periodische Spannungssignal mittels eines ersten Signalgebers einer erfindungsgemäßen Vorrichtung bereitgestellt, also insbesondere erzeugt.

Außerdem umfasst das Verfahren ein Bereitstellen eines zweiten periodischen Spannungssignals mit einer gegenüber der ersten Phase um eine bestimmte Phasenverschiebung verschobenen zweiten Phase zwischen dem ersten elektrischen Längsleiter und dem Referenzleiter am zweiten Endabschnitt. Besonders bevorzugt wird das zweite periodische Spannungssignal mittels eines zweiten Signalgebers einer erfindungsgemäßen Vorrichtung bereitgestellt, also insbesondere erzeugt.

Außerdem umfasst das Verfahren ein Erfassen eines zwischen dem ersten elektrischen Längsleiter und dem Referenzleiter erzeugten elektrischen Feldes mittels eines relativ zum ersten elektrischen Längsleiter und zum Referenzleiter (entlang des Messweges) bewegbaren Sensorelements. Vorzugsweise bildet das Sensorelement einen Teil einer Sensoreinrichtung in einer hier beschriebenen erfindungsgemäßen Vorrichtung.

Außerdem umfasst das Verfahren ein Ermitteln einer Phasenverschiebung des erfassten elektrischen Feldes relativ zum ersten und/oder zweiten periodischen Spannungssignal. Vorzugsweise wird dafür eine Phasendifferenz zwischen dem erfassten elektrischen Feld und einem Referenzsignal ermittelt, wobei als Referenzsignal beispielsweise auch eines der beiden Spannungssignale an den Endabschnitten dienen kann.

Durch die beiden Spannungssignale wird im ersten elektrischen Längsleiter und im Referenzleiter ein elektrischer Strom erzeugt, der von der jeweiligen Phasenlage der beiden Spannungssignale abhängt. Durch diesen Stromfluss ergibt sich aufgrund eines elektrischen Widerstands des ersten elektrischen Längsleiters bzw. des Referenzleiters eine elektrische Potentialänderung (Spannungsabfall oder -anstieg) entlang des ersten elektrischen Längsleiters bzw. des Referenzleiters. Das durch die beiden Spannungssignale zwischen dem ersten elektrischen Längsleiter und dem Referenzleiter bewirkte elektrische Feld hängt aufgrund dieses Spannungsabfalls bzw. -anstiegs somit vom Ort ab und ändert sich mit der Periode der beiden Spannungssignale. Aufgrund der Phasenverschiebung zwischen den beiden Spannungssignalen hängt auch die Phase des elektrischen Feldes vom Ort ab. Dabei ist die Phasenverschiebung zwischen dem ersten und dem zweiten periodischen Spannungssignal insbesondere ungleich Null und ungleich 180°.

Aus der ermittelten Phasenlage des erfassten elektrischen Feldes lässt sich somit auf den Ort des Sensorelements schließen. Das Verfahren umfasst somit ein Bestimmen einer Position des Sensorelements (entlang des Messweges) relativ zum ersten und/oder zweiten Endabschnitt aus der ermittelten Phasenverschiebung.

Vorzugsweise wird das erste und zweite periodische Spannungssignal mit einer Frequenz im Bereich von zumindest etwa 100 Hz, besonders bevorzugt im Bereich von zumindest etwa 1 kHz, weiter bevorzugt in einem Bereich von zumindest etwa 10 kHz bereitgestellt. Außerdem wird das erste und zweite periodische Spannungssignal vorzugsweise mit einer Frequenz in einem Bereich von nicht mehr als etwa 10 MHz, besonders bevorzugt in einem Bereich von nicht mehr als etwa 1 MHz, weiter bevorzugt in einem Bereich von nicht mehr als etwa 100 kHz bereitgestellt. Am meisten bevorzugt wird das erste und zweite periodische Spannungssignal mit einer Frequenz in einem Bereich von etwa 10 kHz bis etwa 50 kHz bereitgestellt.

Vorzugsweise wird das erste und/oder zweite periodische Spannungssignal mit einer Amplitude im Bereich von etwa 50 mV bis etwa 50 V, vorzugsweise im Bereich von etwa 100 mV bis etwa 10 V, noch mehr bevorzugt in einem Bereich von etwa 0,5 V bis etwa 2V bereitgestellt.

Vorzugsweise wird das erfindungsgemäße Verfahren mit einer erfindungsgemäßen Vorrichtung oder mit einer bevorzugten Ausführungsform durchgeführt. Umgekehrt ist eine erfindungsgemäße Vorrichtung vorzugsweise ausgelegt, ein Verfahren gemäß der vorliegenden Erfindung insbesondere in einer der hier beschriebenen bevorzugten Ausführungsformen durchzuführen.

Die Erfindung wird nachfolgend anhand bevorzugter Ausführungsformen mit Bezug auf begleitende Zeichnungen beispielhaft beschrieben, wobei für gleiche oder ähnliche Komponenten die gleichen Bezugszeichen verwendet werden und vorzugsweise die diesbezüglichen Beschreibungen zu verschiedenen Ausführungsformen entsprechend analog angewendet werden können. Dabei zeigen:

Fig. 1:  ein Sendemodul und ein Sensorelement gemäß einer bevorzugten Ausführungsform der Erfindung;

Fig. 2:  eine schematische Darstellung des zeitlichen Verlaufs des von einem Sensorelement in einer Vorrichtung gemäß einer bevorzugten Ausführungsform der Erfindung erfassten elektrischen Feldes an verschiedenen Positionen des Sensorelements relativ zum Sendemodul;

Fig. 3:  eine schematische Darstellung der ermittelten Phase $\alpha$ als Funktion der Position p;

Fig. 4:  ein Sendemodul und ein Sensorelement gemäß einer weiteren bevorzugten Ausführungsform der Erfindung; und

Fig. 5: ein Sendemodul und ein Sensorelement gemäß einer weiteren bevorzugten Ausführungsform der Erfindung.

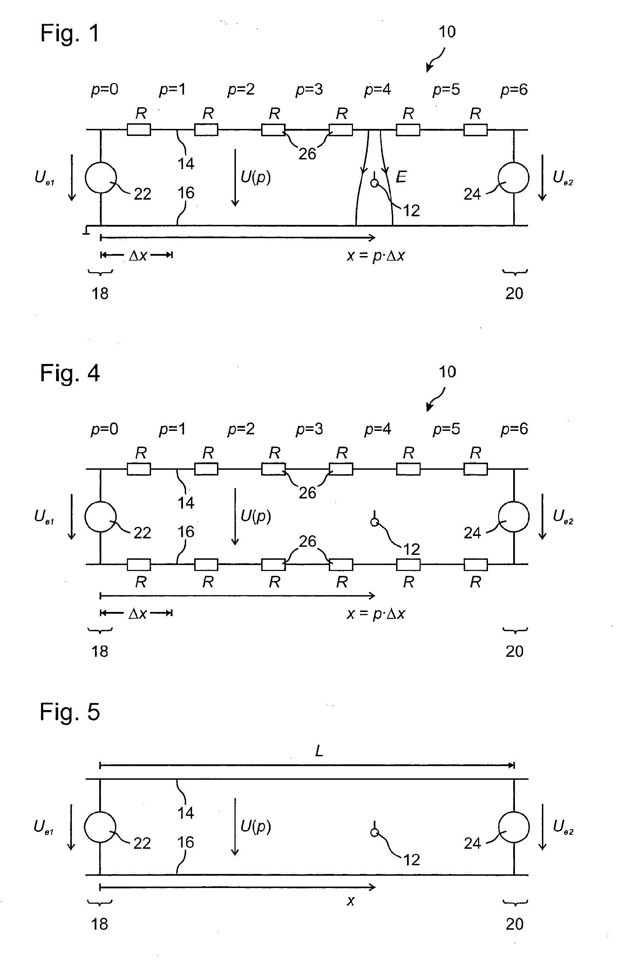

Fig. 1 veranschaulicht Details einer Vorrichtung gemäß einer bevorzugten Ausführungsform der Erfindung. Anhand dieser Darstellung lässt sich auch ein Verfahren gemäß einer bevorzugten Ausführungsform der Erfindung gut verstehen. Insbesondere zeigt Fig. 1 ein Sendemodul 10 und ein Sensorelement 12 einer Vorrichtung gemäß einer bevorzugten Ausführungsform der Erfindung. Das Sensorelement 12 umfasst dabei einen elektrischen Feldsensor, so dass das Sensorelement 12 ausgelegt ist, ein elektrisches Feld E an der Position des Sensorelements 12 zu erfassen. Das Sensorelement 12 ist dabei relativ zum Sendemodul 10 insbesondere entlang bzw. in Richtung einer Längserstreckung x des Sendemoduls 10 bewegbar. In der in Fig. 1 dargestellten Ausführungsform ist die Längserstreckung x schematisch als Position entlang einer Geraden dargestellt. In anderen Ausführungsformen kann die Längserstreckung x auch eine gekrümmte Linie beschreiben, welche beispielsweise einen Winkel festlegt, der mittels der erfindungsgemäßen Vorrichtung gemessen werden kann.

Das Sendemodul 10 umfasst einen ersten elektrischen Längsleiter 14 und einen Referenzleiter 16. In der in Fig. 1 dargestellten bevorzugten Ausführungsform erstrecken sich beide entlang der Längserstreckung x von einem ersten Endabschnitt 18 zu einem zweiten Endabschnitt 20 des Sendemoduls 10 und werden dort jeweils mit einem ersten Spannungssignal $U_{e1}$ bzw. einem zweiten Spannungssignal $U_{e2}$ versorgt. Dazu umfasst das Sendemodul 10 einen ersten Signalgeber 22 (zur Erzeugung des ersten Spannungssignals $U_{e1}$), welcher am ersten Endabschnitt 18 sowohl mit dem ersten Längsleiter 14 als auch mit dem Referenzleiter 16 elektrisch leitfähig verbunden ist. Analog dazu ist ein zweiter Signalgeber 24 zur Erzeugung des zweiten Spannungssignals $U_{e2}$ am zweiten Endabschnitt 20 sowohl mit dem ersten Längsleiter 14 als auch mit dem Referenzleiter 16 elektrisch leitfähig verbunden.

Die beiden Signalgeber 22, 24 bilden zusammen mit dem ersten Längsleiter 14 und dem Referenzleiter 16 einen geschlossenen Stromkreis. Besonders bevorzugt ist dieser Stromkreis einfach geschlossen, d.h. es befinden sich vorzugsweise keine weiteren elektrischen Leiter zwischen dem ersten Endabschnitt 18 und dem zweiten Endabschnitt 20, die eine direkte elektrisch leitfähige Verbindung zwischen dem ersten elektrischen Längsleiter 14 und dem Referenzleiter 16 bewirken. Insbesondere der erste elektrische Längsleiter 14 weist zwischen dem ersten Endabschnitt 18 und dem zweiten Endabschnitt 20 vorzugsweise keine direkt elektrisch leitfähige oder stromführende Verzweigung auf, über welche ein direkter Strom vom ersten elektrischen Längsleiter abfließen oder zum ersten elektrischen Längsleiter zufließen könnte. Der direkte elektrische Strom in den beiden Endabschnitten des ersten elektrischen Längsleiters 14 ist somit der gleiche. Vorzugsweise ist der direkte elektrische Strom im ersten elektrischen Längsleiter 14 entlang der gesamten Längserstreckung x zwischen dem ersten Endabschnitt 18 und dem zweiten Endabschnitt 20 der gleiche.

In der in Fig. 1 gezeigten bevorzugten Ausführungsform umfasst der erste Längsleiter 14 eine Vielzahl von elektrischen Widerstandskomponenten 26, welche besonders bevorzugt in gleichen Abständen entlang der Längserstreckung x des Sendemoduls 10 angeordnet sind. Vorzugsweise ist der elektrische Widerstand jeder Widerstandskomponente 26 größer als der elektrische Widerstand des gesamten Referenzleiters 16. Alternativ oder zusätzlich ist es bevorzugt, dass mehrere, vorzugsweise alle Widerstandskomponenten 26 der Vielzahl von Widerstandskomponenten 26 im ersten elektrischen Längsleiter 14 den gleichen Wert R aufweisen. Fließt nun entlang des gesamten ersten Längsleiters 14 derselbe elektrische Strom, führt dies dazu, dass über allen Widerstandskomponenten gleichen Wertes auch die gleiche elektrische Spannung abfällt. Weisen die einzelnen Widerstandskomponenten 26 unterschiedliche Widerstandswerte auf, so fallen auch entsprechende unterschiedliche Spannungen ab.

Vorzugsweise weist der erste elektrische Längsleiter 14 jeweils zwischen zwei benachbarten Widerstandskomponenten 26 einen elektrisch leitfähigen Leiterabschnitt auf, dessen elektrischer Widerstand kleiner ist als der elektrische Widerstand der Widerstandskomponenten 26. Besonders bevorzugt ist in dieser Ausführungsform der elektrische Widerstand jeder Widerstandskomponente der Vielzahl von Widerstandskomponenten 26 zumindest etwa 5-mal, besonders bevorzugt zumindest etwa 10-mal, weiter bevorzugt zumindest etwa 50-mal, noch mehr bevorzugt zumindest etwa 100-mal, am meisten bevorzugt zumindest etwa 500-mal so groß wie der elektrische Widerstand jedes Leiterabschnitts zwischen den Widerstandskomponenten.

In einer bevorzugten Ausführungsform ist der elektrische Widerstand R jeder Widerstandskomponente 26 der Vielzahl von Widerstandskomponenten 26 zumindest etwa 2-mal, besonders bevorzugt zumindest etwa 5-mal, weiter bevorzugt zumindest etwa 10-mal, noch mehr bevorzugt zumindest etwa 50-mal, am meisten bevorzugt zumindest etwa 100-mal so groß wie der elektrische Widerstand des gesamten Referenzleiters 16 zwischen dem ersten 18 und dem zweiten Endabschnitt 20. Damit ist vorzugsweise der Spannungsabfall entlang des Referenzleiters 16 im Vergleich zum Spannungsabfall über dem ersten elektrischen Längsleiter 14 bzw. über jeder Widerstandskomponente 26 vernachlässigbar. Das elektrische Potential des Referenzleiters 16 ist somit im ersten Endabschnitt 18, im zweiten Endabschnitt 20 und im gesamten Verlauf des Referenzleiters 16 vorzugsweise im Wesentlichen das gleiche. Der Referenzleiter 16 dient damit insbesondere als Referenzpotential, welches insbesondere einem Erdungspotential der Vorrichtung entsprechen kann.

Durch das räumlich und zeitlich veränderliche elektrische Potential entlang des ersten elektrischen Längsleiters 14 entsteht zwischen dem ersten elektrischen Längsleiter 14 und dem Referenzleiter 16 ein räumlich und zeitlich veränderliches elektrisches Feld *E.* Dieses wird mittels des Sensorelements 12 lokal erfasst und hinsichtlich dessen Phasenlage relativ zu den beiden an den Endabschnitten 18, 20 eingekoppelten Spannungssignalen $U_{e1}$ und $U_{e2}$ ausgewertet. So variiert die Phase des vom Sensorelement 12 erfassten elektrischen Feldes E relativ zur Phase des ersten Spannungssignals $U_{e1}$ in Abhängigkeit von der Position x vom Minimalwert Null (am ersten Endabschnitt 18) bis zum Maximalwert $\alpha_2$ (am zweiten Endabschnitt 20).

Ein besonderes Prinzip, das sich die erfindungsgemäße Vorrichtung mit sehr einfachen Mitteln zunutze macht, besteht darin, dass nur die Phase des erfassten elektrischen Feldes und nicht dessen Amplitude ausgewertet werden muss. Verändert sich aus irgendwelchen Gründen der Abstand des Sensorelements 12 vom Sendemodul 10, so verändert sich zwar die Amplitude des erfassten Signals, die Phase hingegen ändert sich wenig.

In der praktischen Ausführung des Sensors hat sich als Betriebsfrequenz, also als eine Frequenz des ersten und zweiten Spannungssignals, im Bereich von etwa 1 kHz bis etwa 100 kHz, vorzugsweise im Bereich von etwa 10 kHz bis etwa 50 kHz (z.B. die Frequenz des Uhrenquarzes mit 32768 Hz) bewährt. Die Amplitude des ersten und/oder zweiten Spannungssignals liegt vorzugsweise im Bereich von etwa 100 mV bis etwa 10 V, besonders bevorzugt im Bereich von etwa 1 V.

In der in Fig. 1 dargestellten, bevorzugten Ausführungsform sind schematisch sechs Widerstandskomponenten 26 veranschaulicht, die jeweils zwischen einzelnen Positionen *p* im ersten elektrischen Längsleiter 14 angeordnet sind. In dieser schematischen Darstellung wird somit lediglich eine maximale Position $p_{max} = 6$ genutzt. In der praktischen Ausführung des Sensors kann man aber auch deutlich mehr diskrete Positionen und entsprechend mehr Widerstandskomponenten 26 realisieren. Vorzugsweise liegt die Anzahl der Widerstandskomponenten 26 im ersten Längsleiter im Bereich von etwa 5 bis etwa 500, besonders bevorzugt im Bereich von etwa 10 bis etwa 200, am meisten bevorzugt im Bereich von etwa 10 bis etwa 100.

Vorzugsweise werden als Spannungssignale von den beiden Signalgebern 22, 24 jeweils sinusförmige Spannungssignale erzeugt. Besonders bevorzugt stellen die Signalgeber 22, 24 die Spannungssignale $U_{e1}$ und $U_{e2}$ mit gleicher Amplitude $U_{e0}$ bereit. Die Spannungssignale lauten daher vorzugsweise:

$$U_{e1} = U_{e0} \cdot \sin(2\pi f \cdot t) \qquad \text{und} \qquad U_{e2} = U_{e0} \cdot \sin(2\pi f \cdot t - \alpha_2)$$

Wichtig im Sinne dieses Aspekts der Erfindung ist die feste Phasenverschiebung $\alpha_2$ des zweiten Spannungssignals $U_{e2}$ gegenüber dem ersten Spannungssignal $U_{e1}$.

In der praktischen Ausführung des Sensors hat sich eine Phasenverschiebung $\alpha_2$ in der Größenordnung von etwa 30° bewährt. Im Allgemeinen liegt die Phasenverschiebung des zweiten periodischen Spannungssignals relativ zum ersten periodischen Spannungssignal (ungeachtet des Vorzeichens) vorzugweise im Bereich von etwa 5° bis etwa 175°, weiter bevorzugt im Bereich von etwa 5° bis etwa 150°, noch mehr bevorzugt im Bereich von etwa 5° bis etwa 120°, besonders bevorzugt in einem Bereich von etwa 5° bis etwa 00°, noch weiter bevorzugt in einem Bereich von etwa 5° bis etwa 60°, am meisten bevorzugt in einem Bereich von etwa 5° bis etwa 30°. "Ungeachtet des Vorzeichens" soll in diesem Fall zum Ausdruck bringen, dass auch die jeweiligen Bereiche mit negativen Vorzeichen entsprechend gleichermaßen bevorzugt sind.

Insbesondere in der in Fig. 1 dargestellten Ausführungsform haben vorzugsweise alle Widerstandskomponenten 26 im ersten elektrischen Längsleiter 14 den gleichen Wert *R*. Sie bilden zusammen eine Serienschaltung von Widerständen. Der elektrische Widerstand im vorzugsweise geerdeten Referenzleiter 16 wird in einer einfachen Betrachtungsweise gegenüber den Widerstandswerten *R* vernachlässigt. Über die Spannungsteilung in der Widerstandskette und die Superposition der Wirkung der beiden Spannungsquellen $U_{e1}$ und $U_{e2}$ entsteht an den einzelnen Positionen *p* die Spannung

$$U(p) = \frac{U_{e0}}{p_{max}} \cdot \left[ (p_{max} - p) \cdot \sin(2\pi f \cdot t) + p \cdot \sin(2\pi f \cdot t - \alpha_2) \right]$$

Diese Spannung an der Position *p* erzeugt eine elektrische Feldstärke zwischen dem jeweiligen Leiterstück des ersten elektrischen Längsleiters 14 und dem Bezugspotential des Referenzleiters 16. Die elektrische Feldstärke ist von der Position *p* abhängig und es gilt in dem Schema von Fig. 1 prinzipiell:

$$E(p) = E_0 \cdot \left[ (p_{\max} - p) \cdot \sin(2\pi f \cdot t) + p \cdot \sin(2\pi f \cdot t - \alpha_2) \right]$$

Dabei kann im Allgemeinen die Amplitude der elektrischen Feldstärke auch von der Position $p$ abhängen. Dies gilt insbesondere dann, wenn der Abstand zwischen dem ersten elektrischen Längsleiter 14 und dem Referenzleiter 16 oder die Lage des Sensorelements 12 relativ zum Sendemodul 10 von der Position $p$ abhängt.

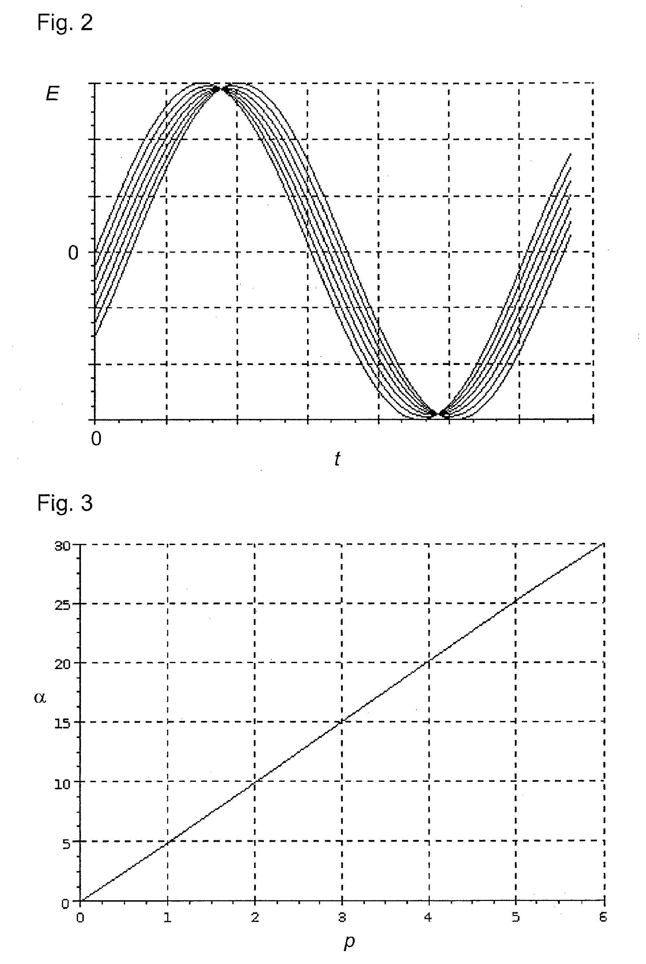

In Fig. 2 ist schematisch der Verlauf des elektrischen Feldes $E$ als Funktion der Zeit $t$ bei den Positionen $p = 0$ bis $p = 6$ für eine Phasenverschiebung $\alpha_2 = 30°$ beispielhaft dargestellt. Die Phasenverschiebung $\alpha$ zwischen den einzelnen Positionen $p$ ist an den Nulldurchgängen der jeweiligen Kurven zu erkennen.

In Fig. 1 ist der geometrische Verlauf des elektrischen Feldes $E$ zwischen dem ersten elektrischen Längsleiter 14 und dem Referenzleiter 16 an der Position $p = 4$ beispielhaft näherungsweise schematisch angedeutet. Im Bereich dieses elektrischen Feldes $E$ befindet sich das Sensorelement 12. Dieses kann im einfachsten Fall aus einem Stück Draht bestehen, welches mit einem hochohmigen Verstärker verbunden ist. Auf diesem Drahtstück wird dann beispielsweise eine elektrische Spannung

$$U_S(p) = U_{S0} \cdot \left[ (p_{\max} - p) \cdot \sin(2\pi f \cdot t) + p \cdot \sin(2\pi f \cdot t - \alpha_2) \right]$$

influenziert und mittels eines Verstärkers der Sensoreinrichtung detektiert.

Für das erfindungsgemäße phasenanaloge Messprinzip ist vorzugsweise nur die Phase dieser periodischen Spannung (relativ zu den Phasen der Spannungssignale $U_{e1}$ und $U_{e2}$) von Bedeutung. Insbesondere ist für die Auswertung der Position des Sensorelements 12 vorzugsweise nicht erforderlich, die Amplitude $U_{S0}$ der influenzierten Spannung $U_S(p)$ auszuwerten. In einer bevorzugten Ausführungsform wird die Phase des detektierten elektrischen Feldes bzw. der influenzierten Spannung durch den Nulldurchgang $U_S = 0$ der zeitlich periodischen Funktion für $U_S(p)$ definiert. Zur Auswertung kann dann beispielsweise der Wert $2\pi f \cdot t$ in der oben genannten Funktion für $U_S(p)$ durch die gesuchte Phase $\alpha$ ersetzt werden. Damit ergibt sich die Gleichung

$$0 = (p_{\max} - p) \cdot \sin(\alpha) + p \cdot \sin(\alpha - \alpha_2),$$

welche den Zusammenhang zwischen der gesuchten Position $p$ und der Phase $\alpha$ beschreibt. Die numerische Lösung in den einzelnen Positionen ergibt vorteilhaft einen fast linearen Zusammenhang $\alpha(p)$:

| p | $\alpha$ |
|---|---|
| 0 | 0.000 |
| 1 | 4.872 |
| 2 | 9.896 |
| 3 | 15.000 |
| 4 | 20.104 |
| 5 | 25.128 |
| 6 | 30.000 |

Mit nur kleinen Abweichungen ergeben sich 5° Phasenverschiebung pro Positionsschritt. Die Darstellung als kontinuierlicher Verlauf $\alpha$ in Abhängigkeit von $p$ in Fig. 3 verdeutlicht dieses Ergebnis. Die Abweichungen von der Linearität hängen unmittelbar mit dem Wert von $\alpha_2 = 30°$ zusammen und liegen unter 0,5 Prozent. Verkleinert man $\alpha_2$ noch weiter, so nimmt auch die Nichtlinearität nochmals ab.

Die für jede Position eindeutig bestimmte Phasenverschiebung ergibt sich unmittelbar aus dem periodischen Verlauf der influenzierten Spannung. Aus diesem Signal wird die Phasenverschiebung $\alpha$ als relevante Größe mit bewährten Methoden der elektronischen Signalverarbeitung ermittelt und steht für die Berechnung der Sensorgröße $x$ zur Verfügung.

Zwei benachbarte Positionen haben den Abstand $\Delta x$ voneinander. Für den zu messenden Weg gilt $x = p \cdot \Delta x$. Der maximale Weg ist $x_{\max} = p_{\max} \cdot \Delta x$. Unter der Annahme, dass $\alpha_2$ nicht zu gross ist, kann der Zusammenhang zwischen $\alpha$ und $p$ als näherungsweise linear gemäß

$$\frac{p}{p_{\max}} = \frac{\alpha}{\alpha_2}$$

angenommen werden. Daher folgt für den zu detektierenden Weg

$$x = p \cdot \Delta x = p_{\max} \cdot \frac{\alpha}{\alpha_2} \cdot \Delta x = \frac{x_{\max}}{\alpha_2} \cdot \alpha$$

Die bevorzugte Anzahl der Widerstandskomponenten 26 liegt beispielsweise im Bereich von etwa 10 bis etwa 1000. Ein Weginkrement $\Delta x$ als Abstand benachbarter Widerstandskomponenten hat als bevorzugte Abmessung einen Wert im Bereich von etwa 2 mm bis etwa 5 cm, noch mehr bevorzugt im Bereich von etwa 5 mm bis etwa 2 cm, am meisten bevorzugt einen Wert von etwa 1 cm. Vorzugsweise liegt der Abstand benachbarter Positionen der Vielzahl von Positionen entlang der Längserstreckung (also insbesondere ein Abstand benachbarter Widerstandskomponenten) in einem Bereich von etwa 1/10 bis etwa 10-mal, noch mehr bevorzugt in einem bereich von etwa 1/5 bis etwa 5-mal, am meisten bevorzugt in einem Bereich von etwa ½ bis etwa 2-mal dem (mittleren und/oder minimalen und/oder maximalen) Abstand zwischen dem ersten Längsleiter 14 und dem Referenzleiter 16.

**Fig. 4** zeigt schematisch Details einer Vorrichtung gemäß einer weiteren bevorzugten Ausführungsform der vorliegenden Erfindung. Soweit die darin verwendeten Bezugszeichen analog zu der Ausführungsform in Fig. 1 verwendet sind, wird auch auf die entsprechende Beschreibung verwiesen, die analog auch auf diese Ausführungsform anzuwenden ist. Anders als in der in Fig. 1 gezeigten Ausführungsform weist das Sendemodul 10 in der in Fig. 4 dargestellten Ausführungsform in beiden Leitungen, also sowohl im ersten Längsleiter 14 als auch im Referenzleiter 16, diskrete Widerstandskomponenten 26 auf. Dabei kann sich der Widerstandswert und/oder die Anzahl der Widerstandskomponenten in den einzelnen Leitungen voneinander unterscheiden. In einer bevorzugten Ausführungsform weisen auch der erste Längsleiter 14 und der Referenzleiter 16 (vor allem in diesem Fall auch als zweiter Längsleiter bezeichnet) gleich viele Widerstandskomponenten 26 vorzugsweise in gleichen räumlichen Abständen entlang der Längserstreckung des Sendemoduls 10 besonders bevorzugt mit gleichem Widerstandswert $R$ auf.

Eine weitere bevorzugte Ausführungsform der vorliegenden Erfindung ist in **Fig. 5** veranschaulicht. Wiederum werden analoge Komponenten mit gleichen Bezugszeichen versehen, wobei diesbezüglich in analoger Weise auf die entsprechende Beschreibung zu den anderen Ausführungsformen verwiesen wird. Bei den bisher vorgestellten Ausführungsformen fällt an einzelnen, diskreten Widerstandskomponenten 26 jeweils eine diskrete Spannung ab. In der in Fig. 5 dargestellten Ausführungsform ist die Vielzahl diskreter Widerstandskomponenten des ersten elektrischen Längsleiters 14 durch den kontinuierlichen, insbesondere homogenen resistiven Charakter des ersten Längsleiters 14 bzw. des Referenzleiters 16 ersetzt. Damit fällt entlang des ersten Längsleiters 14 die elektrische Spannung kontinuierlich ab, d.h. das elektrische Potential entlang des ersten Längsleiters 14 ändert sich stetig, besonders bevorzugt linear, wobei sich die Potentialänderung entlang des ersten Längsleiters 14 periodisch mit dem ersten und zweiten Spannungssignal ändert und von der Phasenverschiebung zwischen dem ersten und zweiten Spannungssignal abhängt.

In einer bevorzugten Ausführungsform gemäß Fig. 5 wird analog zu Fig. 1 der elektrische Widerstand in den elektrischen Längsleitern 14, 16 vom elektrischen Widerstand im ersten elektrischen Längsleiter 14 dominiert, während der elektrische Widerstand im Referenzleiter 16 in der bereits oben analog beschriebenen Weise demgegenüber vernachlässigbar ist.

In einer anderen bevorzugten Ausführungsform gemäß Fig. 5 wird analog zu Fig. 4 der gesamte elektrische Widerstand entlang der Längserstreckung im Sendemodul 10 von beiden elektrischen Längsleitern 14, 16 vorzugsweise im Wesentlichen in gleichem Maße beeinflusst, d.h. der elektrische Widerstand der ersten elektrischen Längsleiters 14 stimmt vorzugsweise im Wesentlichen mit dem elektrischen Widerstand des zweiten elektrischen Längsleiters (Referenzleiters 16) überein. Die Abhängigkeit einer lokalen Spannungsdifferenz U(x) zwischen den beiden elektrischen Längsleitern 14, 16 von der Position x lässt sich dabei folgendermaßen beschreiben:

Für den in beiden elektrischen Längsleitern 14, 16 fließenden elektrischen Strom gilt:

$$I = \frac{U_{e1} - U_{e2}}{2R} = \frac{U_{e0}}{2R} \left[ \sin\left(2\pi f \cdot t\right) - \sin\left(2\pi f \cdot t - \alpha\right) \right]$$

mit den oben angegebenen ersten und zweiten Spannungssignalen $U_{e1}$ und $U_{e2}$ sowie dem elektrischen Widerstand $R$ jeweils für den ersten elektrischen Längsleiter 14 und für den Referenzleiter 16 auf einer gesamten Länge $L$ des Messweges. Für die lokale Spannung $U(x)$ zwischen den beiden elektrischen Längsleitern gilt damit

$$U(x) = U_{e1} - I \cdot \frac{2x}{L} \cdot R = U_{e0} \cdot \left[ \left(1 - \frac{x}{L}\right) \cdot \sin(2\pi f \cdot t) + \frac{x}{L} \cdot \sin(2\pi f \cdot t - \alpha) \right]$$

Diese Spannung an der Position x erzeugt eine elektrische Feldstärke zwischen dem ersten elektrischen Längsleiter 14 und dem Referenzleiter 16. Die elektrische Feldstärke ist von der Position x abhängig und es gilt in dem Schema von Fig. 5 prinzipiell:

$$E(x) = E_0 \cdot \left[ \left(1 - \frac{x}{L}\right) \cdot \sin(2\pi f \cdot t) + \frac{x}{L} \cdot \sin(2\pi f \cdot t - \alpha) \right]$$

Derselbe Zusammenhang gilt im Prinzip auch für den Fall, dass der gesamte elektrische Widerstand im Stromkreis der beiden elektrischen Längsleiter 14, 16 im Wesentlichen vom elektrischen Widerstand des ersten elektrischen Längsleiters 14 dominiert wird, der Referenzleiter 16 also über seine gesamte Länge im Wesentlichen das gleiche elektrische Potential hat.

Im Allgemeinen kann auch die Amplitude der elektrischen Feldstärke von der Position x abhängen. Dies gilt insbesondere dann, wenn der Abstand zwischen dem ersten elektrischen Längsleiter 14 und dem Referenzleiter 16 oder die Lage des Sensorelements 12 relativ zum Sendemodul 10 von der Position x abhängt.

Insgesamt ermöglicht die Erfindung damit eine präzise und schnelle Positionsbestimmung mit einer hohen Störungsunempfindlichkeit bzw. Störfestigkeit und einem hohen Auflösungsvermögen mit vergleichsweise einfachen Mitteln. Insbesondere kann das Sendemodul vergleichsweise einfach aufgebaut sein. Dabei kann je nach Anwendung beispielsweise entweder das Sendemodul ortsfest zu umliegenden Komponenten aufgebaut werden, während sich das Sensorelement bewegt, oder das Sensorelement behält eine relativ zur Umgebung feste Position, während sich das Sendemodul relativ dazu bewegt. Für das Messprinzip ist lediglich ausschlaggebend, dass das Sendemodul und das Sensorelement relativ zueinander bewegbar sind, und dass mittels der erfindungsgemäßen Auswertung der Phasenlage des erfassten elektrischen Feldes die relative Position des Sendemoduls und des Sensorelements zueinander bestimmt werden kann.

**Bezugszeichenliste**

10    Sendemodul
12    Sensorelement
14    erster elektrischer Längsleiter
16    Referenzleiter (zweiter elektrischer Längsleiter)
18    erster Endabschnitt
20    zweiter Endabschnitt
22    erster Signalgeber
24    zweiter Signalgeber
26    Widerstandskomponenten

**Patentansprüche**

**1.** Vorrichtung zur Positionsbestimmung umfassend:

- zumindest ein Sendemodul (10) mit

-- zumindest einem ersten elektrischen Längsleiter (14) und einem Referenzleiter (16), die sich von einem ersten Endabschnitt (18) des Sendemoduls (10) zu einem zweiten Endabschnitt (20) des Sendemoduls (10) erstrecken;

-- einem ersten Signalgeber (22), welcher ausgelegt ist, am ersten Endabschnitt (18) des Sendemoduls (10) zwischen dem ersten elektrischen Längsleiter (14) und dem Referenzleiter (16) ein erstes periodisches Spannungssignal mit einer ersten Phase bereitzustellen; und

-- einem zweiten Signalgeber (24), welcher ausgelegt ist, am zweiten Endabschnitt (20) des Sendemoduls (10) zwischen dem ersten elektrischen Längsleiter (14) und dem Referenzleiter (16) ein zweites periodisches Spannungssignal mit einer gegenüber der ersten Phase um eine bestimmte Phasenverschiebung ($\alpha_2$) verschobenen zweiten Phase bereitzustellen; und

- eine Sensoreinrichtung, welche zumindest ein relativ zum Sendemodul (10) bewegbares Sensorelement (12) umfasst, welches ausgelegt ist, ein zwischen dem ersten elektrischen Längsleiter (14) und dem Referenzleiter (16) erzeugtes elektrisches Feld zu erfassen, wobei die Sensoreinrichtung ausgelegt ist, eine Phasenverschiebung des erfassten elektrischen Feldes relativ zu einem periodischen Referenzsignal zu ermitteln, dessen Phase relativ zum ersten Spannungssignal um eine Referenzphase verschoben ist.

2. Vorrichtung nach Anspruch 1, wobei der erste elektrische Längsleiter (14) und/oder der Referenzleiter (16) eine Vielzahl von elektrischen Widerstandskomponenten (26) aufweist bzw. aufweisen.

3. Vorrichtung nach Anspruch 2, wobei jede Widerstandskomponente der Vielzahl von Widerstandskomponenten den gleichen elektrischen Widerstand aufweist und wobei die Widerstandskomponenten innerhalb des ersten elektrischen Längsleiters und/oder innerhalb des Referenzleiters in Reihe geschaltet und mit gleichen räumlichen Abständen zwischen jeweils benachbarten Widerstandskomponenten angeordnet sind.

4. Vorrichtung nach einem der vorangegangenen Ansprüche, wobei die Anzahl der Widerstandskomponenten im ersten elektrischen Längsleiter und/oder die Anzahl der Widerstandskomponenten im Referenzleiter im Bereich von etwa 5 bis etwa 500, besonders bevorzugt im Bereich von etwa 10 bis etwa 200, am meisten bevorzugt im Bereich von etwa 10 bis etwa 100 liegt.

5. Vorrichtung nach einem der vorangegangenen Ansprüche, wobei der elektrische Widerstand des ersten elektrischen Längsleiters zwischen dem ersten und zweiten Endabschnitt zumindest etwa 10-mal, vorzugsweise zumindest etwa 100-mal, noch mehr bevorzugt zumindest etwa 1000-mal so groß, am meisten bevorzugt zumindest etwa 10000-mal so groß ist wie der elektrische Widerstand des Referenzleiters zwischen dem ersten und zweiten Endabschnitt.

6. Vorrichtung nach einem der vorangegangenen Ansprüche, wobei der erste elektrische Längsleiter (14) und der Referenzleiter (16) zwischen dem ersten und zweiten Endabschnitt zumindest abschnittsweise parallel zueinander verlaufen.

7. Vorrichtung nach einem der vorangegangenen Ansprüche, wobei der erste elektrische Längsleiter (14) und/oder der Referenzleiter eine Länge zwischen dem ersten und zweiten Endabschnitt aufweist bzw. aufweisen, der zumindest etwa 5-mal so groß, vorzugsweise zumindest etwa 10-mal so groß, weiter bevorzugt zumindest etwa 20-mal su groß, am meisten bevorzugt zumindest etwa 50-mal oder sogar zumindest etwa 100-mal so groß ist wie der gegenseitige Abstand des ersten elektrischen Längsleiters und des Referenzleiters.

8. Verfahren zur Positionsbestimmung umfassend die Schritte:

- Bereitstellen eines ersten periodischen Spannungssignals mit einer ersten Phase zwischen einem ersten elektrischen Längsleiter (14) und einem Referenzleiter (16) an einem ersten Endabschnitt (18) des ersten elektrischen Längsleiters (14) und des Referenzleiters (16), die sich vom ersten Endabschnitt (18) zu einem zweiten Endabschnitt (20) erstrecken;

- Bereitstellen eines zweiten periodischen Spannungssignals mit einer gegenüber der ersten Phase um eine bestimmte Phasenverschiebung verschobenen zweiten Phase zwischen dem ersten elektrischen Längsleiter (14) und dem Referenzleiter (16) am zweiten Endabschnitt (20);

- Erfassen eines zwischen dem ersten elektrischen Längsleiter (14) und dem Referenzleiter (16) erzeugten elektrischen Feldes mittels eines relativ zum ersten elektrischen Längsleiter (14) und zum Referenzleiter (16) bewegbaren Sensorelements (12);

- Ermitteln einer Phasenverschiebung des erfassten elektrischen Feldes relativ zum ersten und/oder zweiten periodischen Spannungssignal; und

- Bestimmen einer Position des Sensorelements (12) relativ zum ersten und/oder zweiten Endabschnitt aus der ermittelten Phasenverschiebung.

9. Verfahren nach Anspruch 8, wobei das erste und zweite periodische Spannungssignal mit einer Frequenz im Bereich von zumindest etwa 100 Hz, besonders bevorzugt im Bereich von zumindest etwa 1 kHz, weiter bevorzugt im Bereich von zumindest etwa 10 kHz und/oder in einem Bereich von nicht mehr als etwa 10 MHz, besonders bevorzugt in einem Bereich von nicht mehr als etwa 1 MHz, weiter bevorzugt in einem Bereich von nicht mehr als etwa 100 kHz, am meisten bevorzugt in einem Bereich von etwa 10 kHz bis etwa 50 kHz bereitgestellt wird.

10. Verfahren nach Anspruch 8 oder 9, wobei das erste und/oder zweite periodische Spannungssignal mit einer Amplitude im Bereich von etwa 50 mV bis etwa 50 V, vorzugsweise im Bereich von etwa 100 mV bis etwa 10 V, noch mehr bevorzugt in einem Bereich von etwa 0,5 V bis etwa 2V bereitgestellt wird.

## Fig. 1

$p=0$    $p=1$    $p=2$    $p=3$    $p=4$    $p=5$    $p=6$

10

$U_{e1}$   22   14   16   $U(p)$   26   $E$   12   24   $U_{e2}$

$\Delta x$    $x = p \cdot \Delta x$

18    20

## Fig. 4

$p=0$    $p=1$    $p=2$    $p=3$    $p=4$    $p=5$    $p=6$

10

$U_{e1}$   22   14   16   $U(p)$   26   12   24   $U_{e2}$

$\Delta x$    $x = p \cdot \Delta x$

18    20

## Fig. 5

$L$

$U_{e1}$   22   14   16   $U(p)$   12   24   $U_{e2}$

$x$

18    20

Fig. 2

Fig. 3

**Europäisches Patentamt**
**European Patent Office**
**Office européen des brevets**

## EUROPÄISCHER RECHERCHENBERICHT

Nummer der Anmeldung

EP 12 00 7289

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 44 47 295 A1 (SIEDLE HORST KG [DE]) 15. Mai 1996 (1996-05-15) * Abbildungen * * Ansprüche * * Spalte 5, Zeile 2 - Spalte 6, Zeile 3 * ----- | 1-10 | INV. G01D5/165 |
| A | US 5 347 875 A (LEW HYOK SANG [US] ET AL) 20. September 1994 (1994-09-20) * Abbildung 1 * * Ansprüche * ----- | 1-10 | |
| A,D | EP 2 428 773 A1 (HOCHSCHULE MANNHEIM TECHNIK GESTALTUNG UND SOZIALWESEN [DE]) 14. März 2012 (2012-03-14) * Abbildungen * * Seiten -; Ansprüche * ----- | 1-10 | |
| A,D | WO 2007/107353 A1 (HOCHSCHULE MANNHEIM HOCHSCHULE [DE]; CASTRONOVO ANGELO [DE]; VOIGT BUR) 27. September 2007 (2007-09-27) * Abbildungen * * Ansprüche * ----- | 1-10 | RECHERCHIERTE SACHGEBIETE (IPC) G01D |

Der vorliegende Recherchenbericht wurde für alle Patentansprüche erstellt

| Recherchenort | Abschlußdatum der Recherche | Prüfer |
|---|---|---|
| München | 24. April 2013 | Moulara, Guilhem |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

**EP 2 725 324 A1**

**ANHANG ZUM EUROPÄISCHEN RECHERCHENBERICHT
ÜBER DIE EUROPÄISCHE PATENTANMELDUNG NR.**

EP 12 00 7289

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2013

| Im Recherchenbericht angeführtes Patentdokument | Datum der Veröffentlichung | Mitglied(er) der Patentfamilie | Datum der Veröffentlichung |
|---|---|---|---|
| DE 4447295 A1 | 15-05-1996 | DE 4447295 A1<br>US 6031380 A<br>US 6133743 A | 15-05-1996<br>29-02-2000<br>17-10-2000 |
| US 5347875 A | 20-09-1994 | KEINE | |
| EP 2428773 A1 | 14-03-2012 | KEINE | |
| WO 2007107353 A1 | 27-09-2007 | DE 102006012952 A1<br>EP 1996900 A1<br>WO 2007107353 A1 | 03-01-2008<br>03-12-2008<br>27-09-2007 |

EPO FORM P0461

Für nähere Einzelheiten zu diesem Anhang : siehe Amtsblatt des Europäischen Patentamts, Nr.12/82

16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007107353 A1
- EP 2428773 A1